(19) Europäisches Patentamt
European Patent Office
Office européen des brevets

(11) **EP 4 376 123 A1**

(12) **EUROPEAN PATENT APPLICATION**
published in accordance with Art. 153(4) EPC

(43) Date of publication:
**29.05.2024 Bulletin 2024/22**

(21) Application number: **23775199.5**

(22) Date of filing: **07.03.2023**

(51) International Patent Classification (IPC):
**H01M 4/1395** (2010.01)   **H01M 4/38** (2006.01)
**H01M 4/583** (2010.01)   **H01M 4/134** (2010.01)
**H01M 4/62** (2006.01)   **H01M 4/04** (2006.01)
**H01M 10/052** (2010.01)

(52) Cooperative Patent Classification (CPC):
**H01M 4/04; H01M 4/134; H01M 4/1395;**
**H01M 4/38; H01M 4/583; H01M 4/62;**
**H01M 10/052;** Y02E 60/10

(86) International application number:
**PCT/KR2023/003086**

(87) International publication number:
**WO 2023/182701 (28.09.2023 Gazette 2023/39)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **25.03.2022 KR 20220037218**

(71) Applicant: **LG Energy Solution, Ltd.**
**Seoul 07335 (KR)**

(72) Inventors:
• **KIM, Young Jae**
**Daejeon 34122 (KR)**
• **LEE, Jaewook**
**Daejeon 34122 (KR)**

(74) Representative: **Hoffmann Eitle**
**Patent- und Rechtsanwälte PartmbB**
**Arabellastraße 30**
**81925 München (DE)**

(54) **ANODE SLURRY, PREPARATION METHOD FOR ANODE SLURRY, ANODE FOR LITHIUM SECONDARY BATTERY INCLUDING ANODE SLURRY, AND METHOD FOR MANUFACTURING ANODE FOR LITHIUM SECONDARY BATTERY**

(57) The present application relates to a negative electrode slurry, a method for preparing a negative electrode slurry, a negative electrode for a lithium secondary battery including a negative electrode slurry, and a method for manufacturing a negative electrode for a lithium secondary battery.

[Figure 1]

## Description

[Technical Field]

This application claims priority to and the benefit of Korean Patent Application No. 10-2022-0037218 filed in the Korean Intellectual Property Office on March 25, 2022, the entire contents of which are incorporated herein by reference.

The present application relates to a negative electrode slurry, a method for preparing a negative electrode slurry, a negative electrode for a lithium secondary battery including a negative electrode slurry, and a method for manufacturing a negative electrode for a lithium secondary battery.

[Background Art]

Demands for the use of alternative energy or clean energy are increasing due to the rapid increase in the use of fossil fuels, and as a part of this trend, the most actively studied field is a field of electricity generation and electricity storage using an electrochemical reaction.

Currently, representative examples of an electrochemical device using such electrochemical energy include a secondary battery, and the usage areas thereof are increasing more and more.

As technology development of and demand for mobile devices have increased, demands for secondary batteries as an energy source have been rapidly increased. Among such secondary batteries, lithium secondary batteries having high energy density and voltage, long cycle life, and low self-discharge rate have been commercialized and widely used. Further, as an electrode for such a high capacity lithium secondary battery, studies have been actively conducted on a method for preparing a high-density electrode having a higher energy density per unit volume.

In general, a secondary battery is composed of a positive electrode, a negative electrode, an electrolyte, and a separator. The negative electrode includes a negative electrode active material for intercalating and de-intercalating lithium ions from the positive electrode, and as the negative electrode active material, a silicon-based particle having high discharge capacity may be used.

In particular, as the demand for high-density energy batteries has been recently increased, studies have been actively conducted on a method of increasing the capacity together using a silicon-based compound such as Si/C or SiOx, which has a capacity 10-fold higher than that of a graphite-based material as a negative electrode active material, but a silicon-based compound, which is a high-capacity material, has a higher capacity than graphite used in the related art, but has a problem in that the volume rapidly expands in the charging process to disconnect the conductive path, resulting in deterioration in battery characteristics.

In addition, in order to satisfy the requirements of rapid charging, in the case of a silicon-based negative electrode having a large capacity, the coating thickness of the negative electrode active material layer may be formed to be much thinner than that of a carbon-based negative electrode, and in this case, silicon-based materials are harder than soft carbon-based materials, so that when a negative electrode including a silicon-based active material is manufactured, there is a problem in that the negative electrode active material layer is not coated during the process of manufacturing an electrode, or a negative electrode in a defective state is manufactured even though the negative electrode active material layer is coated.

Thus, although it is attempted to manufacture a negative electrode in which the thickness of a negative electrode active material layer is small in order to satisfy the requirements of rapid charging while using a silicon-based negative electrode in order to enhance capacity characteristics, it is still not easy to manufacture a negative electrode having capacity characteristics and capable of rapid charging in the current state due to the aforementioned problems.

That is, when a soft carbon-based material is used, the thickness of a negative electrode active material layer may be formed to be small for rapid charging, but as the electrode becomes thinner, a carbon-based material that has a capacity 10-fold smaller than that of a silicon-based material is included, so that the capacity characteristics are not exhibited, and in the case of a silicon-based negative electrode, capacity characteristics may be secured, but there is a problem with rapid charging because it is difficult in terms of process to form a thin electrode.

Therefore, in the manufacture of a silicon-based negative electrode for maximizing capacity characteristics, there is a need for research on a method capable of minimizing changes in composition and content included in the negative electrode and also capable of having an effect on rapid charging by minimizing the thickness of the silicon-based negative electrode.

<Related Art Document>

(Patent Document 1) Japanese Patent Application Laid-Open No. 2009-080971

[Detailed Description of the Invention]

[Technical Problem]

A silicon-based negative electrode is less likely to be significantly changed in composition and content of the negative electrode active material layer composition in order to suppress volume expansion due to charging and discharging, and maximize capacity characteristics. In particular, silicon-based negative electrodes are characterized by using high-capacity materials, but defects occur during the battery formation process when thin electrodes are formed due to the characteristics of the materials. As a result of conducting research to form a thin silicon-based negative electrode for rapid charging, it has been found that the aforementioned problem can be solved as the particle size distribution of the negative electrode slurry used in the process of manufacturing a negative electrode is controlled while minimally changing the composition of the negative electrode active material layer.

Thus, the present application relates to a negative electrode slurry, a method for preparing a negative electrode slurry, a negative electrode for a lithium secondary battery including a negative electrode slurry, and a method for manufacturing a negative electrode for a lithium secondary battery.

[Technical Solution]

An exemplary embodiment of the present specification provides a negative electrode slurry including: a negative electrode active material layer composition; and a solvent, in which the negative electrode active material layer composition includes: a silicon-based active material; a negative electrode conductive material; and a negative electrode binder, and particles in the negative electrode slurry have a Dmin of 8 um or less and a Dmax of 7 um or more and 30 um or less in the negative electrode slurry particle size (Grinding Gauge).

In another exemplary embodiment, provided is a method for preparing a negative electrode slurry, the method including: forming a mixture by mixing a negative electrode conductive material; and a negative electrode binder; performing a first mixing by adding a solvent to the mixture; and performing a second mixing by adding a silicon-based active material to the mixed mixture, in which the first mixing and second mixing steps include performing mixing at 2,000 rpm to 3,000 rpm for 10 minutes to 60 minutes, and the negative electrode slurry has a Dmin of 8 um or less and a Dmax of 7 um or more and 30 um or less.

In still another exemplary embodiment, provided is a negative electrode for a lithium secondary battery, including: a negative electrode current collector layer; and a negative electrode active material layer provided on one surface or both surfaces of the negative electrode current collector layer, in which the negative electrode active material layer is prepared from the negative electrode slurry according to the present application or a dried material thereof.

Finally, provided is a method for manufacturing a negative electrode for a lithium secondary battery, the method including: preparing a negative electrode current collector layer; forming a negative electrode coating layer by coating one surface or both surfaces of the negative electrode current collector layer with the negative electrode slurry according to the present application; drying the negative electrode coating layer; and forming a negative electrode active material layer by roll-pressing the negative electrode coating layer.

[Advantageous Effects]

The negative electrode slurry according to the present application satisfies a Dmin of 8 um or less and a Dmax of 7 um or more and 30 um or less in the negative electrode slurry particle size (Grinding Gauge). In the case of a silicon-based negative electrode, capacity characteristics are excellent, but it is important to form thin electrodes for rapid charging, and when the particle size value of the negative electrode slurry according to the present application satisfies the above range, the coating thickness of the negative electrode slurry is formed to be small, and accordingly, the silicon-based negative electrode has a feature in which it is possible to secure a negative electrode for a lithium secondary battery, which has excellent capacity characteristics and is also simultaneously capable of rapid charging.

In the case of the negative electrode slurry according to the present application, the main object is to solve the aforementioned problems by adjusting the particle size of the negative electrode slurry itself rather than adjusting the viscosity of the slurry in order to prevent agglomeration of particles, and the like. That is, capacity characteristics and rapid charge characteristics were enhanced by adjusting the size of particles included in the negative electrode slurry rather than adjusting the types and contents of the negative electrode active material, negative electrode binder, and negative electrode conductive material included in the negative electrode slurry.

That is, in the case of the negative electrode for a lithium secondary battery according to the present application, the volume expansion and contraction due to charging and discharging, which are problems due to the use of a silicon-based active material, can be suppressed through a water-based binder having high rigidity, and furthermore, the negative electrode slurry particle size can satisfy the above range to control the thickness of the electrode to be thin. Accordingly, the negative electrode according to the present application can have the characteristics of high capacity and high output, which are the advantages of silicon-based negative electrodes, and simultaneously has the characteristic capable of rapid charging.

[Description of Drawings]

FIG. 1 is a view illustrating the stacking structure of a negative electrode for a lithium secondary battery according to an exemplary embodiment of the present application.

FIG. 2 is a view illustrating the stacking structure of a lithium secondary battery according to an exemplary embodiment of the present application.

<Explanation of Reference Numerals and Symbols>

10: Negative electrode current collector layer
20: Negative electrode active material layer
30: Separator
40: Positive electrode active material layer
50: Positive electrode current collector layer
100: Negative electrode for lithium secondary battery
200: Positive electrode for lithium secondary battery

[Best Mode]

Prior to the description of the present invention, some terms will be first defined.

When one part "includes" one constituent element in the present specification, unless otherwise specifically described, this does not mean that another constituent element is excluded, but means that another constituent element may be further included.

In the present specification, 'p to q' means a range of 'p or more and q or less'.

In the present specification, "specific surface area" is measured by the BET method, and is specifically calculated from an amount of nitrogen gas adsorbed under liquid nitrogen temperature (77K) using BELSORP-mini II manufactured by BEL Japan, Inc. That is, in the present application, the BET specific surface area may mean a specific surface area measured by the measurement method.

In the present specification, "Dn" means the particle size distribution, and means the particle size at the n% point of the cumulative distribution of the number of particles according to the particle size. That is, D50 is the particle size (median particle size) at the 50% point of the cumulative distribution of the number of particles according to the particle size, D90 is the particle size at the 90% point of the cumulative distribution of the number of particles according to the particle size, and D10 is the particle size at the 10% point of the cumulative distribution of the number of particles according to the particle size. Meanwhile, the median particle size may be measured using a laser diffraction method. Specifically, after a powder to be measured is dispersed in a dispersion medium, a particle size distribution is calculated by introducing the resulting dispersion into a commercially available laser diffraction particle size measurement device (for example, Microtrac S3500) to measure the difference in diffraction pattern according to the particle size when particles pass through the laser beam.

In an exemplary embodiment of the present application, the particle size or particle diameter may mean the average diameter or representative diameter of each grain forming a particle.

In the present specification, the fact that a polymer includes a monomer as a monomer unit means that the monomer participates in a polymerization reaction, and thus is included as a repeating unit in the polymer. In the present specification, when the polymer includes a monomer, it is interpreted to be the same as when the polymer includes a monomer as a monomer unit.

In the present specification, the 'polymer' is understood to be used in a broad sense, including a copolymer, unless otherwise specified as a 'homopolymer'.

In the present specification, a weight average molecular weight (Mw) and a number average molecular weight (Mn) are polystyrene-conversion molecular weights measured by gel permeation chromatography (GPC) using a monodisperse polystyrene polymer (standard sample) with various degrees of polymerization commercially available for the measurement of the molecular weight as a standard material. In the present specification, the molecular weight means a weight average molecular weight unless otherwise described.

Hereinafter, the present invention will be described in detail with reference to drawings, such that a person with ordinary skill in the art to which the present invention pertains can easily carry out the present invention. However, the present invention can be implemented in various different forms, and is not limited to the following description.

An exemplary embodiment of the present specification provides a negative electrode slurry including: a negative electrode active material layer composition; and a solvent, in which the negative electrode active material layer composition includes: a silicon-based active material; a negative electrode conductive material; and a negative electrode binder, and particles in the negative electrode slurry have a Dmin of 8 um or less and a Dmax of 7 um or more and 30 um or less in the negative electrode slurry particle size (Grinding Gauge).

The negative electrode slurry according to the present application satisfies a Dmin of 8 um or less and a Dmax of 7 um or more and 30 um or less in the negative electrode slurry particle size (Grinding Gauge). In the case of a silicon-based negative electrode, capacity characteristics are excellent, but it is important to form thin electrodes for rapid charging, and when the particle size value of the negative electrode slurry according to the present application satisfies the above range, the coating thickness of the negative electrode slurry is formed to be small, and accordingly, the silicon-based negative electrode has a feature in which it is possible to secure a negative electrode for a lithium secondary battery, which has excellent capacity characteristics and is also simultaneously capable of rapid charging.

In an exemplary embodiment of the present application, the negative electrode slurry particle size (Grinding Gauge) may mean the particle size of the secondary particles formed by agglomeration of the primary particles included in the negative electrode slurry, and specifically, may mean the particle size of secondary particles formed by agglomeration of one or more particles selected from the group consisting of a negative electrode active material, a negative electrode conductive material and a negative electrode binder included in the negative electrode slurry.

In this case, the particle size of the negative electrode slurry may be measured by a measuring device in which a value capable of measuring the particle size is described and there are fine grooves depending on the size, and specifically, after 5 ml of a negative electrode slurry prepared at a reference point of 0 um is poured, the largest value (Dmax) is finally measured starting from the smallest value (Dmin) depending on the size of slurry particles while sliding a steel bar, which is a sub-measuring device based on engraved grooves, and the particle size of the slurry may be measured by setting these values as the Dmin and Dmax values.

In this case, in an exemplary embodiment of the present application, the Dmin in the negative electrode slurry particle size (Grinding Gauge) may mean the particle size of the smallest particle in the negative electrode slurry, the Dmax in the negative electrode slurry particle size (Grinding Gauge) may mean the particle size of the largest particle in the negative electrode slurry, but some errors may be included.

In an exemplary embodiment of the present application, the Dmin in the negative electrode slurry particle size (Grinding Gauge) may be 8 um or less, and the Dmax may be 7 um or more and 30 um or less.

In another exemplary embodiment, the Dmin in the negative electrode slurry particle size (Grinding Gauge) may satisfy a range of 8 um or less, preferably 7.5 um or less, more preferably 7 um or less, and most preferably 6 um or less, and the range of the lower limit thereof is not particularly limited, but may satisfy a range of 0.1 um or more, preferably 1 um or more.

In still another exemplary embodiment, the Dmax in the negative electrode slurry particle size (Grinding Gauge) may satisfy a range of 7 um or more and 30 um or less, preferably 7 um or more and 25 um or less, more preferably 7 um or more and 20 um or less, and most preferably 7 um or more and 15 um or less.

In an exemplary embodiment of the present application, provided is a negative electrode slurry whose average particle size (D50) value is 5 um or more and 20 um or less.

As described above, when the particle size of the negative electrode slurry satisfies the above range, it is possible to have an effect of rapid charging because a negative electrode active material layer having a small thickness may be formed by adjusting the particle size range of the negative electrode slurry even though the negative electrode slurry includes a silicon-based active material having high rigidity, and accordingly, it is characterized by being capable of obtaining a good-quality electrode and obtaining a negative electrode free from problems such as generation of electrode lines.

In an exemplary embodiment of the present application, the negative electrode slurry may include a negative electrode active material layer composition; and a solvent.

In an exemplary embodiment of the present application, a solid content of the negative electrode slurry may satisfy 5% or more and 40% or less.

In another exemplary embodiment, the solid content of the negative electrode slurry may satisfy a range of 5% or more and 40% or less, preferably 7% or more and 35% or less, and more preferably 10% or more and 30% or less.

The solid content of the negative electrode slurry may mean the content of the negative electrode active material layer composition included in the negative electrode slurry, and may mean the content of the negative electrode active material layer composition based on 100 parts by weight of the negative electrode slurry.

When the solid content of the negative electrode slurry satisfies the above range, the present invention has a feature capable of efficiently forming a negative electrode active material layer by minimizing the particle aggregation phenomenon of the negative electrode active material layer composition because the viscosity is suitable during the formation of the negative electrode active material layer.

In an exemplary embodiment of the present application, the solvent can be used without limitation as long as the solvent can dissolve a negative electrode active material layer composition, and specifically, water, acetone or NMP may be used.

In an exemplary embodiment of the present application, provided is a negative electrode for a lithium secondary battery, in which the weight loading amount of the negative electrode slurry is 80 mg/25cm$^2$ or more and 160 mg/25cm$^2$ or less.

In another exemplary embodiment, the weight loading amount (B1) of the negative electrode slurry may satisfy a range of 80 mg/25cm$^2$ or more and 160 mg/25cm$^2$ or less, preferably 85 mg/25cm$^2$ or more and 140 mg/25cm$^2$ or less, and more preferably 85 mg/25cm$^2$ or more and 130 mg/25cm$^2$ or less.

The weight loading amount of the negative electrode slurry may refer to the amount of the negative electrode slurry applied to the negative electrode current collector layer. In this case, the weight loading amount of the negative electrode slurry satisfies the above range, and accordingly, the negative electrode slurry has a feature capable of maximizing the performance characteristics (capacity, output) of the negative electrode, and satisfies the range of the negative electrode slurry particle size, so that the advantage of rapid charging may also be brought about by having capacity characteristics and simultaneously being capable of forming thin electrodes.

In an exemplary embodiment of the present application, the viscosity of the negative electrode slurry may satisfy a range of 1,000 cP or more and 10,000 cP or less.

In another exemplary embodiment, the negative electrode slurry may have a viscosity of 3,000 cP or more and 10,000 cP or less, preferably 3,000 cP or more and 7,000 cP or less.

As described above, the particle size distribution of the negative electrode slurry satisfies the above range, and further, the viscosity is adjusted by a dispersion process to be described below, and as the above viscosity range is satisfied, a subsequent mixing may be excellent, and accordingly, the present invention has a feature that the output of the secondary battery is improved.

Hereinafter, a silicon-based active material, a negative electrode conductive material and a binder included in a negative electrode active material layer composition included in a negative electrode slurry will be described.

In an exemplary embodiment of the present application, the negative electrode slurry includes a negative electrode active material layer composition; and a solvent, and the negative electrode active material layer composition may include: a silicon-based active material; a negative electrode conductive material; and a negative electrode binder.

In an exemplary embodiment of the present application, provided is a negative electrode slurry in which the silicon-based active material includes one or more selected from the group consisting of SiOx (x=0), SiOx (0<x<2), SiC, and a Si alloy.

In an exemplary embodiment of the present application, the silicon-based active material includes one or more selected from the group consisting of SiOx (x=0) and SiOx (0<x<2), and may include 70 parts by weight or more of the SiOx (x=0) based on 100 parts by weight of the silicon-based active material.

In another exemplary embodiment, the SiOx (x=0) may be included in an amount of 70 parts by weight or more, preferably 80 parts by weight or more, and more preferably 90 parts by weight or more, and may be included in an amount of 100 parts by weight or less, preferably 99 parts by weight or less, and more preferably 95 parts by weight or less, based on 100 parts by weight of the silicon-based active material.

In an exemplary embodiment of the present application, for the silicon-based active material, particularly, pure silicon (Si) may be used as the silicon-based active material. The use of pure silicon (Si) as the silicon-based active material may mean that based on the total 100 parts by weight of the silicon-based active material as described above, pure Si (SiOx (x=0)), which is not bound to other particles or elements, is included in the above range.

Meanwhile, the silicon-based active material of the present invention may have an average particle diameter (D50) of 5 um to 10 um, specifically 5.5 um to 8 $\mu$m, and more specifically 6 um to 7 um. When the average particle diameter is included in the above range, the viscosity of a negative electrode slurry is formed in a suitable range because the specific surface area of the particle is included in a suitable range. Accordingly, the dispersion of the particles constituting the negative electrode slurry is facilitated. Furthermore, the size of a silicon-based active material has a value equal to or more than the lower limit value range, and since a composite composed of a conductive material and a binder in the negative electrode slurry makes a contact area between silicon particles and conductive materials excellent, the possibility that the conductive network lasts is increased, so that the capacity retention rate is increased. Meanwhile, when the average particle diameter satisfies the above range, excessively large silicon particles are eliminated to form a smooth surface of the negative electrode, and accordingly, it is possible to prevent the heterogeneous phenomenon of the current density during charging and discharging.

In an exemplary embodiment of the present application, the silicon-based active material generally has a characteristic BET specific surface area. The BET specific surface area of the silicon-based active material is preferably 0.01 to 150.0 m$^2$/g, more preferably 0.1 to 100.0 m$^2$/g, particularly preferably 0.2 to 80.0 m$^2$/g, and most preferably 0.2 to 18.0 m$^2$/g. The BET specific surface area is measured by DIN 66131 (using nitrogen).

In an exemplary embodiment of the present application, the silicon-based active material may be present, for example, in a crystalline or amorphous form, and preferably is not porous. The silicon particles are preferably spherical or fragment-shaped particles. Alternatively but less preferably, the silicon particles may also have a fibrous structure or be present in the form of a film or coating including silicon.

In an exemplary embodiment of the present application, provided is a negative electrode slurry in which the silicon-based active material is present in an amount of 60 parts by weight or more based on 100 parts by weight of the negative electrode active material layer composition.

In another exemplary embodiment, the silicon-based active material may be included in an amount of 60 parts by weight or more, preferably 65 parts by weight or more, and more preferably 70 parts by weight or more, and may be included in an amount of 95 parts by weight or less, preferably 90 parts by weight or less, and more preferably 85 parts by weight or less, based on 100 parts by weight of the negative electrode active material layer composition.

In an exemplary embodiment of the present application, the silicon-based active material may have a non-circular form, and the circularity thereof is, for example, 0.9 or less, for example 0.7 to 0.9, for example, 0.8 to 0.9, and for example, 0.85 to 0.9.

In the present application, the circularity is determined by the following Equation 1, where A is the area and P is the boundary line.

[Formula 1]

$$4\pi A/P^2$$

In the related art, it was common to use only a graphite-based compound as a negative electrode active material, but recently, as the demand for a high-capacity battery has increased, attempts to mix and use a silicon-based active material have been increased in order to increase the capacity. However, in the case of the silicon-based active material, even though characteristics of the silicon-based active material itself are partially adjusted as described above, the volume rapidly expands in the process of charging and discharging, so that a problem in that a conductive path formed in the negative electrode active material layer is impaired may occur in some cases.

Therefore, in an exemplary embodiment of the present application, the negative electrode conductive material may include one or more selected from the group consisting of a dotted conductive material, a planar conductive material, and a linear conductive material.

In an exemplary embodiment of the present application, the dotted conductive material may be used to enhance the conductivity of the negative electrode, and means a conductive material having conductivity in a spherical or dot form without inducing a chemical change. Specifically, the dotted conductive material may be at least one selected from the group consisting of natural graphite, artificial graphite, carbon black, acetylene black, Ketjen black, channel black, furnace black, lamp black, thermal black, a conductive fiber, fluorocarbon, an aluminum powder, a nickel powder, zinc oxide, potassium titanate, titanium oxide and a polyphenylene derivative, and may preferably include carbon black in terms of implementing high conductivity and being excellent in dispersibility.

In an exemplary embodiment of the present application, the dotted conductive material may have a BET specific surface area of 40 m$^2$/g or more and 70 m$^2$/g or less, preferably 45 m$^2$/g or more and 65 m$^2$/g or less, and more preferably 50 m$^2$/g or more and 60 m$^2$/g or less.

In an exemplary embodiment of the present application, the functional group content (volatile matter) of the dotted conductive material may satisfy 0.01% or more and 1% or less, preferably 0.01% or more and 0.3% or less, and more preferably 0.01% or more and 0.1% or less.

In particular, when the functional group content of the dotted conductive material satisfies the above range, a functional group present on the surface of the dotted conductive material is present, so that when water is used as a solvent, the dotted conductive material may be smoothly dispersed in the solvent.

In an exemplary embodiment of the present application, it is characterized in that the dotted conductive material having a functional group content in the above range is included along with the silicon-based active material, and the functional group content may be adjusted according to the degree to which the dotted conductive material is heat-treated.

In an exemplary embodiment of the present application, the dotted conductive material may have a particle diameter of 10 nm to 100 nm, preferably 20 nm to 90 nm, and more preferably 20 nm to 60 nm.

In an exemplary embodiment of the present application, the conductive material may include a planar conductive material.

The planar conductive material may increase the surface contact between silicon particles in the negative electrode to improve conductivity and simultaneously suppress the disconnection of the conductive path due to the volume expansion, and may be expressed as a plate-like conductive material or bulk-type conductive material.

In an exemplary embodiment of the present application, the planar conductive material may include at least one selected from the group consisting of plate-like graphite, graphene, graphene oxide, and graphite flake, and may be preferably plate-like graphite.

In an exemplary embodiment of the present application, the planar conductive material may have an average particle diameter (D50) of 2 um to 7 um, specifically 3 um to 6 $\mu$m, and more specifically 4 um to 5 um. When the average particle diameter satisfies the above range, sufficient particle size facilitates dispersion without causing an excessive increase in viscosity of the negative electrode slurry. Therefore, the dispersion effect is excellent when particles are dispersed using the same equipment and time.

In an exemplary embodiment of the present application, provided is a negative electrode active material layer composition in which the planar conductive material has a D10 of 0.5 um or more and 1.5 um or less, a D50 of 2.5 um or more and 3.5 um or less, and a D90 of 7.0 um or more and 15.0 um or less.

In an exemplary embodiment of the present application, as the planar conductive material, it is possible to use a high specific surface area planar conductive material having a high BET specific surface area; or a low specific surface area planar conductive material.

In an exemplary embodiment of the present application, as the planar conductive material, a high specific surface area planar conductive material; or a low specific surface area planar conductive material may be used without limitation, but in particular, the planar conductive material according to the present application may be affected by the dispersion effect to some extent in the electrode performance, so that it may be particularly desirable to use a low specific surface area planar conductive material that does not cause a problem in dispersion.

In an exemplary embodiment of the present application, the planar conductive material may have a BET specific surface area of 5 $m^2$/g or more.

In another exemplary embodiment, the planar conductive material may have a BET specific surface area of 5 $m^2$/g or more and 500 $m^2$/g or less, preferably 5 $m^2$/g or more and 300 $m^2$/g or less, and more preferably 5 $m^2$/g or more and 250 $m^2$/g or less.

In still another exemplary embodiment, the planar conductive material is a high specific surface area planar conductive material, and the BET specific surface area may satisfy a range of 50 $m^2$/g or more and 500 $m^2$/g or less, preferably 80 $m^2$/g or more and 300 $m^2$/g or less, and more preferably 100 $m^2$/g or more and 300 $m^2$/g or less.

In yet another exemplary embodiment, the planar conductive material is a low specific surface area planar conductive material, and the BET specific surface area may satisfy a range of 5 $m^2$/g or more and 40 $m^2$/g or less, preferably 5 $m^2$/g or more and 30 $m^2$/g or less, and more preferably 5 $m^2$/g or more and 25 $m^2$/g or less.

As other conductive materials, there may be a linear conductive material such as carbon nanotubes. The carbon nanotubes may be bundle type carbon nanotubes. The bundle type carbon nanotubes may include a plurality of carbon nanotube units. Specifically, the term 'bundle type' used herein, unless otherwise specified, refers to a secondary shape in the form of a bundle or rope in which the plurality of carbon nanotube units is aligned side by side in an alignment where longitudinal axes of the carbon nanotube units are substantially the same or intertwined. In the carbon nanotube unit, a graphite sheet has a cylindrical shape with a nano-sized diameter and has an sp2 bond structure. In this case, the carbon nanotube unit may exhibit characteristics of a conductor or semiconductor depending on a structure and an angle at which the graphite sheet is roll-pressed. The bundle type carbon nanotubes may be uniformly dispersed during the preparation of a negative electrode compared to entangled type carbon nanotubes, and the conductivity of the negative electrode may be improved by smoothly forming a conductive network in the negative electrode.

In an exemplary embodiment of the present application, the linear conductive material may include SWCNT; or MWCNT.

In an exemplary embodiment of the present application, the negative electrode conductive material may be present in an amount of 5 parts by weight or more and 40 parts by weight or less based on 100 parts by weight of the negative electrode active material layer composition.

In another exemplary embodiment, the negative electrode conductive material may be included in an amount of 5 parts by weight or more and 40 parts by weight or less, preferably 10 parts by weight or more and 30 parts by weight or less, and more preferably 10 parts by weight or more and 25 parts by weight or less, based on 100 parts by weight of the negative electrode active material layer composition.

In an exemplary embodiment of the present application, provided is a negative electrode slurry in which the negative electrode conductive material includes a planar conductive material; and a linear conductive material.

In an exemplary embodiment of the present application, the negative electrode conductive material includes a planar conductive material; and a linear conductive material, and may include 0.01 part by weight or more and 10 parts by weight or less of the linear conductive material; and 90 parts by weight or more and 99.99 parts by weight or less of the planar conductive material, based on 100 parts by weight of the negative electrode conductive material.

In another exemplary embodiment, the linear conductive material may be included in an amount of 0.01 part by weight or more and 10 parts by weight or less, preferably 0.05 part by weight or more and 5 parts by weight or less, and more preferably 0.1 part by weight or more and 3 parts by weight or less, based on 100 parts by weight of the negative electrode conductive material.

In still another exemplary embodiment, the planar conductive material may be included in an amount of 90 parts by weight or more and 99.99 parts by weight or less, preferably 95 parts by weight or more and 99.95 parts by weight or less, and more preferably 97 parts by weight or more and 99.9 parts by weight or less, based on 100 parts by weight of the negative electrode conductive material.

In particular, in an exemplary embodiment of the present application, as the negative electrode conductive material includes a planar conductive material and a linear conductive material and each satisfies the composition and ratio, the negative electrode conductive material has a feature in which output characteristics at high C-rate are excellent because the service life characteristics of the existing lithium secondary battery are not greatly affected and points where the battery can be charged and discharged are increased.

The negative electrode conductive material according to the present application has a completely different configuration from a positive electrode conductive material applied to the positive electrode. That is, the negative electrode conductive material according to the present application serves to capture a contact point between silicon-based active materials in which the volume expansion of the electrode is very large due to charging and discharging, and the positive electrode conductive material serves to impart partial conductivity while playing a buffer role as a cushioning role when roll-pressed, and the configuration and role thereof are completely different from those of the negative electrode conductive material of the present invention.

Further, the negative electrode conductive material according to the present application is applied to a silicon-based active material, and has a completely different configuration from a conductive material applied to a graphite-based active material. That is, the conductive material used for the electrode having the graphite-based active material simply has small particles with respect to the active material, and thus has the characteristics of enhancing the output characteristics and imparting partial conductivity, and the configuration and role thereof are completely different from those of the negative electrode conductive material applied together with the silicon-based active material as in the present invention.

In an exemplary embodiment of the present application, the dotted conductive material used as the above-described negative electrode conductive material has a structure and a role different from those of a carbon-based active material generally used as an existing negative electrode active material. Specifically, the carbon-based active material used as the negative electrode active material may be artificial graphite or natural graphite, and means a material that is processed into a spherical or dot shape and used in order to facilitate the storage and release of lithium ions.

In contrast, the planar conductive material used as the negative electrode conductive material is a material having a planar or plate-like shape, and may be expressed as plate-like graphite. That is, the plate-like conductive material is a material included to maintain the conductive path in the negative electrode active material layer, and means a material for securing a conductive path in a planar form in the negative electrode active material layer rather than a role of storing and releasing lithium.

That is, in the present application, the fact that plate-like graphite is used as a conductive material means that the plate-like graphite is processed into a planar or plate-like shape and used as a material that secures a conductive path rather than a role of storing or releasing lithium. In this case, the negative electrode active material included together has high capacity characteristics for lithium storage and release, and plays a role capable of storing and releasing all lithium ions transmitted from the positive electrode.

In contrast, in the present application, the fact that a carbon-based active material is used as an active material means that the carbon-based active material is processed into a dot or spherical shape and used as a material that serves to store or release lithium.

That is, in an exemplary embodiment of the present application, artificial graphite or natural graphite, which is a carbon-based active material is in a dot form, and the BET specific surface area thereof may satisfy a range of 0.1 $m^2$/g or more and 4.5 $m^2$/g or less. In addition, plate-like graphite, which is a planar conductive material, is in a planar form, and may have a BET specific surface area of 5 $m^2$/g or more.

In an exemplary embodiment of the present application, the negative electrode binder may include at least one selected from the group consisting of a polyvinylidene fluoride-hexafluoropropylene copolymer (PVDF-co-HFP), polyvinylidene fluoride, polyacrylonitrile, polymethylmethacrylate, polyvinyl alcohol, carboxymethyl cellulose (CMC), starch, hydroxypropyl cellulose, regenerated cellulose, polyvinylpyrrolidone, tetrafluoroethylene, polyethylene, polypropylene, polyacrylic acid, an ethylene-propylene-diene monomer (EPDM), a sulfonated EPDM, styrene butadiene rubber (SBR), fluorine rubber, polyacrylic acid and a material in which the hydrogen thereof is substituted with Li, Na, Ca, or the like, and may also include various copolymers thereof.

The negative electrode binder according to an exemplary embodiment of the present application plays a role of supporting the active material and the conductive material in order to prevent the distortion and structural deformation of the negative electrode structure in the volume expansion and relaxation of the silicon-based active material, and when the above role is satisfied, all general binders can be applied, specifically, a water-based binder can be used, and more specifically, a PAM-based binder can be used.

In an exemplary embodiment of the present application, provided is a negative electrode slurry, in which the negative electrode binder includes a water-based binder, and the negative electrode binder is included in an amount of 5 parts by weight or more and 15 parts by weight or less, based on 100 parts by weight of the negative electrode active material layer composition.

In another exemplary embodiment, the negative electrode binder may be included in an amount of 5 parts by weight or more and 15 parts by weight or less, preferably 7 parts by weight or more and 13 parts by weight or less, and more preferably 10 parts by weight or more and 12 parts by weight or less, based on 100 parts by weight of the negative electrode active material layer composition.

In the case of the negative electrode slurry according to the present application, a silicon-based active material is used to maximize the capacity characteristics, and volume expansion during charging and discharging is greater than when an existing carbon-based active material is used. As the existing carbon-based active material, a rubber-based binder having low rigidity due to low volume expansion was typically used, and further, since the content of the binder is low, the binder in silicon-based negative electrodes is not important.

However, in order to suppress the volume expansion of the silicon-based active material, the water-based binder having high rigidity as described above is applied, and accordingly, the negative electrode binder has the aforementioned range, and thus has features capable of effectively preventing the volume expansion due to charging and discharging of the silicon-based active material and also capable of easily forming the dispersion of the conductive material.

In an exemplary embodiment of the present application, provided is a method for preparing a negative electrode slurry, the method including: forming a mixture by mixing a negative electrode conductive material; and a negative electrode binder; performing a first mixing by adding a solvent to the mixture; and performing a second mixing by adding a silicon-based active material to the mixed mixture, in which the first mixing and second mixing steps include performing mixing at 2,000 rpm to 3,000 rpm for 10 minutes to 60 minutes, and the negative electrode slurry has a Dmin of 8 um or less and a Dmax of 7 um or more and 30 um or less in the negative electrode slurry particle size (Grinding Gauge).

In the method for manufacturing the negative electrode slurry, the above-described description of the negative electrode slurry may be applied to each description.

In an exemplary embodiment of the present application, provided is a method for preparing a negative electrode slurry, in which the mixing temperature is 50°C or less in the first mixing and second mixing steps. In this case, the temperature in the mixing process means the temperature of the negative electrode slurry itself, and the mixing temperature may be 50°C or less, preferably 40°C or less, and more preferably 30°C or less, and may be 20°C or more.

Further, in an exemplary embodiment of the present application, the viscosity in the process of preparing the negative electrode slurry is not limited as long as the process can be performed, but specifically, the viscosity may satisfy a range of 1000 cP to 15000 cP, and specifically, the viscosity may satisfy a range of 4000 cP to 8000 cP. In this case, the viscosity may mean the viscosity of the negative electrode slurry itself in the process of preparing the negative electrode slurry.

That is, in the process of preparing the negative electrode slurry as described above, as the conditions of the mixing process, the temperature conditions of the negative electrode slurry, and the viscosity conditions of the negative electrode slurry are adjusted to specific ranges, the negative electrode slurry particle size (Grinding Gauge) range of the negative electrode slurry according to the present application may be adjusted to a specific range.

Ultimately, the negative electrode slurry particle size (Grinding Gauge) range of the negative electrode slurry according to the present invention is not changed by simply adjusting only one factor, but is a complex factor according to the composition and content (material characteristics) of the negative electrode composition included in the negative electrode slurry, and process conditions (temperature, mixing conditions, and viscosity) of the negative electrode slurry, and in the present application, it corresponds to the main object of the present invention that an optimal negative electrode slurry particle size (Grinding Gauge) range was confirmed.

In an exemplary embodiment of the present application, provided is a negative electrode for a lithium secondary battery, including: a negative electrode current collector layer; and a negative electrode active material layer provided on one surface or both surfaces of the negative electrode current collector layer, in which the negative electrode active material layer includes the negative electrode slurry of the present application or a dried material thereof.

In an exemplary embodiment of the present application, the negative electrode active material layer includes the negative electrode slurry of the present application or a dried material thereof, and the including of the dried material of the negative electrode slurry may mean that after a solvent is evaporated, the content of the solvent satisfies the case of 0.1 parts by weight or less based on 100 parts by weight of the negative electrode slurry.

In an exemplary embodiment of the present application, the negative electrode current collector generally has a thickness of 1 um to 100 um. The negative electrode current collector is not particularly limited as long as the negative electrode current collector has high conductivity without causing a chemical change to the battery, and for example, it is possible to use copper, stainless steel, aluminum, nickel, titanium, fired carbon, copper or stainless steel surface-treated with carbon, nickel, titanium, silver, and the like, an aluminum-cadmium alloy, and the like. In addition, the negative electrode current collector layer may also increase the bonding strength of a negative electrode active material by forming fine irregularities on the surface thereof, and the negative electrode current collector layer may be used in various forms such as a film, a sheet, a foil, a net, a porous body, a foam body, and a non-woven fabric body.

In an exemplary embodiment of the present application, provided is a negative electrode for a lithium secondary battery, in which the negative electrode current collector layer has a thickness of 1 um or more and 100 um or less, the negative electrode active material layer has a thickness of 1 um or more and 50 um or less, and the negative electrode for a lithium secondary battery has a thickness of 2 um or more and 100 um or less.

That is, in the case of the negative electrode for a lithium secondary battery according to the present application, a silicon-based active material is included in a negative electrode active material layer, and as a negative electrode active material layer is formed by coating the negative electrode slurry under the above-described specific conditions, capacity characteristics are excellent as in the existing silicon-based negative electrode, and the thickness is also formed to be thin as in the above range, so that the negative electrode for a lithium secondary battery according to the present application has a feature capable of having an effect of rapid charging.

However, the thickness of the negative electrode current collector layer may be variously modified depending on the type and use of the negative electrode used, and is not limited thereto.

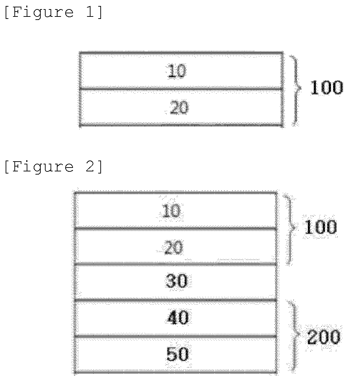

FIG. 1 is a view illustrating the stacking structure of a negative electrode for a lithium secondary battery according to an exemplary embodiment of the present application. Specifically, it is possible to confirm a negative electrode 100 for a lithium secondary battery, including a negative electrode active material layer 20 on one surface of a negative electrode current collector layer 10, and FIG. 1 illustrates the negative electrode active material layer formed on one surface, but the negative electrode active material layer may be included on both surfaces of the negative electrode current collector layer.

In an exemplary embodiment of the present application, the porosity of the negative electrode active material layer may satisfy a range of 10% or more and 60% or less.

In another exemplary embodiment, the porosity of the negative electrode active material layer may satisfy a range of 10% or more and 60% or less, preferably 20% or more and 50% or less, and more preferably 30% or more and 45% or less.

The porosity varies depending on the composition and content of the silicon-based active material; the conductive material; and the binder, which are included in the negative electrode active material layer, and in particular, as the silicon-based active material; and the negative electrode conductive material according to the present application are included in a specific composition and content, the above range is satisfied, and accordingly, it is characterized in that electrical conductivity and resistance in the electrode have appropriate ranges.

In an exemplary embodiment of the present application, provided is a method for manufacturing a negative electrode for a lithium secondary battery, the method including: preparing a negative electrode current collector layer; forming a negative electrode coating layer by coating one surface or both surfaces of the negative electrode current collector layer with the negative electrode slurry according to the present application; drying the negative electrode coating layer; and forming a negative electrode active material layer by roll-pressing the negative electrode coating layer.

In this case, provided is a method for manufacturing a negative electrode for a lithium secondary battery, in which the negative electrode coating layer has a thickness of 20 um or more and 50 um or less.

That is, in the manufacture of the negative electrode for a lithium secondary battery according to the present application, as a coating layer is formed by applying a negative slurry whose particle size is controlled under the specific conditions according to the present application to a part in which it is difficult to control the thickness of the active material layer of the silicon-based negative electrode, which is an existing problem, the negative electrode for a lithium secondary battery according to the present application has a feature capable of implementing the aforementioned thickness range.

In an exemplary embodiment of the present application, provided is a lithium secondary battery including: a positive electrode; the negative electrode for a lithium secondary battery according to the present application; a separator provided between the positive electrode and the negative electrode; and an electrolyte.

FIG. 2 is a view illustrating the stacking structure of a lithium secondary battery according to an exemplary embodiment of the present application. Specifically, it is possible to confirm a negative electrode 100 for a lithium secondary battery, which includes a negative electrode active material layer 20 on one surface of a negative electrode current collector layer 10 and to confirm a positive electrode 200 for a lithium secondary battery, which includes a positive electrode active material layer 40 on one surface of a positive electrode current collector layer 50, and it is shown that the negative electrode 100 for a lithium secondary battery and the positive electrode 200 for a lithium secondary battery are formed in a structure in which the electrodes are stacked with a separator 30 interposed therebetween.

The secondary battery according to an exemplary embodiment of the present specification may particularly include the above-described negative electrode for a lithium secondary battery. Specifically, the secondary battery may include a negative electrode, a positive electrode, a separator interposed between the positive electrode and the negative electrode, and an electrolyte, and the negative electrode is the same as the above-described negative electrode. Since the negative electrode has been described in detail, a specific description thereof will be omitted.

The positive electrode may include a positive electrode current collector and a positive electrode active material layer formed on the positive electrode current collector and including the positive electrode active material.

In the positive electrode, the positive electrode current collector is not particularly limited as long as the positive electrode current collector has conductivity without causing a chemical change to the battery, and for example, it is possible to use stainless steel, aluminum, nickel, titanium, fired carbon, or aluminum or stainless steel whose surface is treated with carbon, nickel, titanium, silver, and the like. Further, the positive electrode current collector may typically have a thickness of 3 to 500 um, and the adhesion of the positive electrode active material may also be enhanced by forming fine irregularities on the surface of the current collector. For example, the positive electrode current collector may be used in various forms such as a film, a sheet, a foil, a net, a porous body, a foam body, and a non-woven fabric body.

The positive electrode active material may be a typically used positive electrode active material. Specifically, the positive electrode active material includes: a layered compound such as lithium cobalt oxide ($LiCoO_2$) and lithium nickel oxide ($LiNiO_2$) or a compound substituted with one or more transition metals; a lithium iron oxide such as $LiFe_3O_4$; a lithium manganese oxide such as chemical formula $Li_{1+c1}Mn_{2-c1}O_4$ ($0 \leq c1 \leq 0.33$), $LiMnO_3$, $LiMn_2O_3$, and $LiMnO_2$; a lithium copper oxide ($Li_2CuO_2$); a vanadium oxide such as $LiV_3O_8$, $V_2O_5$, and $Cu_2V_2O_7$; a Ni site type lithium nickel oxide expressed as chemical formula $LiNi_{1-c2}M_{c2}O_2$ (here, M is at least any one selected from the group consisting of Co, Mn, Al, Cu, Fe, Mg, B and Ga, and c2 satisfies $0.01 \leq c2 \leq 0.3$); a lithium manganese composite oxide expressed as chemical formula $LiMn_{2-c3}M_{c3}O_2$ (here, M is at least any one selected from the group consisting of Co, Ni, Fe, Cr, Zn and Ta, and c3 satisfies $0.01 \leq c3 \leq 0.1$) or $Li_2Mn_3MO_8$ (here, M is at least any one selected from the group consisting of Fe, Co, Ni, Cu and Zn.); $LiMn_2O_4$ in which Li of the chemical formula is partially substituted with an alkaline earth metal ion, and the like, but is not limited thereto. The positive electrode may be Li-metal.

The positive electrode active material layer may include a positive electrode conductive material and a positive electrode binder together with the above-described positive electrode active material.

In this case, the positive electrode conductive material is used to impart conductivity to the electrode, and can be used without particular limitation as long as the positive electrode conductive material has electron conductivity without causing a chemical change to a battery to be constituted. Specific examples thereof include graphite such as natural graphite or artificial graphite; a carbon-based material such as carbon black, acetylene black, Ketjen black, channel black, furnace black, lamp black, thermal black, and carbon fiber; metal powder or metal fiber such as copper, nickel, aluminum, and silver; a conductive whisker such as zinc oxide and potassium titanate; a conductive metal oxide such as titanium oxide; or a conductive polymer such as a polyphenylene derivative, and any one thereof or a mixture of two or more thereof may be used.

Alternatively, the positive electrode binder serves to improve the bonding between positive electrode active material particles and the adhesion between the positive electrode active material and the positive electrode current collector. Specific examples thereof may include polyvinylidene fluoride (PVDF), a polyvinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene monomer (EPDM), a sulfonated EPDM, styrene-butadiene rubber (SBR), fluorine rubber, or various copolymers thereof, and any one thereof or a mixture of two or more thereof may be used.

The separator separates the negative electrode and the positive electrode and provides a passage for movement of lithium ions, and can be used without particular limitation as long as the separator is typically used as a separator in a secondary battery, and in particular, a separator having an excellent ability to retain moisture of an electrolyte as well as low resistance to ion movement in the electrolyte is preferable. Specifically, it is possible to use a porous polymer film, for example, a porous polymer film formed of a polyolefin-based polymer such as an ethylene homopolymer, a propylene homopolymer, an ethylene/butene copolymer, an ethylene/hexene copolymer, and an ethylene/methacrylate copolymer, or a laminated structure of two or more layers thereof. In addition, a typical porous non-woven fabric, for example, a non-woven fabric made of a glass fiber having a high melting point, a polyethylene terephthalate fiber, and the like may also be used. Furthermore, a coated separator including a ceramic component or a polymeric material may be used to secure heat resistance or mechanical strength and may be selectively used as a single-layered or multi-layered structure.

Examples of the electrolyte include an organic liquid electrolyte, an inorganic liquid electrolyte, a solid polymer electrolyte, a gel-type polymer electrolyte, a solid inorganic electrolyte, a molten-type inorganic electrolyte, and the like, which can be used in the preparation of a lithium secondary battery, but are not limited thereto.

Specifically, the electrolyte may include a non-aqueous organic solvent and a metal salt.

As the non-aqueous organic solvent, it is possible to use, for example, an aprotic organic solvent, such as N-methyl-2-pyrrolidinone, propylene carbonate, ethylene carbonate, butylene carbonate, dimethyl carbonate, diethyl carbonate, γ-butyrolactone, 1,2-dimethoxy ethane, tetrahydrofuran, 2-methyl tetrahydrofuran, dimethyl sulfoxide, 1,3-dioxolane, formamide, dimethylformamide, dioxolane, acetonitrile, nitromethane, methyl formate, methyl acetate, phosphate triester, trimethoxy methane, a dioxolane derivative, sulfolane, methyl sulfolane, 1,3-dimethyl-2-imidazolidinone, a propylene carbonate derivative, a tetrahydrofuran derivative, ether, methyl propionate, and ethyl propionate.

In particular, among the carbonate-based organic solvents, cyclic carbonates ethylene carbonate and propylene carbonate may be preferably used because the cyclic carbonates have high permittivity as organic solvents of a high viscosity and thus dissociate a lithium salt well, and such cyclic carbonates may be more preferably used since the cyclic carbonate may be mixed with a linear carbonate of a low viscosity and low permittivity such as dimethyl carbonate and diethyl carbonate in an appropriate ratio and used to prepare an electrolyte having a high electric conductivity.

As the metal salt, a lithium salt may be used, the lithium salt is a material which is easily dissolved in the non-aqueous electrolyte, and for example, as an anion of the lithium salt, it is possible to use one or more selected from the group consisting of F-, Cl-, I-, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$ and $(CF_3CF_2SO_2)_2N^-$.

In the electrolyte, for the purpose of improving the service life characteristics of a battery, suppressing the decrease in battery capacity, and improving the discharge capacity of the battery, one or more additives, such as, for example, a halo-alkylene carbonate-based compound such as difluoroethylene carbonate, pyridine, triethylphosphite, triethanolamine, cyclic ether, ethylenediamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride may be further included in addition to the above electrolyte constituent components.

An exemplary embodiment of the present invention provides a battery module including the secondary battery as a unit cell, and a battery pack including the same. The battery module and the battery pack include the secondary battery which has high capacity, high rate properties, and cycle properties, and thus, may be used as a power source of a medium-and-large sized device selected from the group consisting of an electric vehicle, a hybrid electric vehicle, a plug-in hybrid electric vehicle, and a power storage system.

[Best Mode]

Hereinafter, preferred embodiments will be suggested to facilitate understanding of the present invention, but the embodiments are only provided to illustrate the present invention, and it is apparent to those skilled in the art that various alterations and modifications are possible within the scope and technical spirit of the present invention, and it is natural that such alterations and modifications also fall within the accompanying claims.

**<Preparation Examples>**

**<Manufacture of negative electrode>**

A negative electrode active material layer composition composed of Si (average particle diameter (D50): 3.5 um) as a silicon-based active material, a first conductive material, a second conductive material, and polyacrylamide (PAM) as a binder was added at a weight ratio shown in the following Table 1 to distilled water as a solvent for forming a negative electrode slurry, thereby preparing a negative electrode slurry (solid concentration of 25 wt%).

[Table 1]

| | Silicon-based active material | First conductive material | Second conductive material | Binder |
|---|---|---|---|---|
| Example 1 | 75 | 14.625 | 0.375 | 10 |
| Example 2 | 80 | 10 | 0.4 | 9.6 |
| Example 3 | 75 | 14.625 | 0.375 | 10 |
| Example 4 | 75 | 14.625 | 0.375 | 10 |
| Example 5 | 75 | 14.625 | 0.375 | 10 |
| Example 6 | 75 | 14.625 | 0.375 | 10 |
| Comparative Example 1 | 70 | 20 | 0.210 | 9.79 |
| Comparative Example 2 | 70 | 20 | 0.35 | 9.65 |
| Comparative Example 3 | 70 | 10 | 0.315 | 9.685 |

(continued)

|  | Silicon-based active material | First conductive material | Second conductive material | Binder |
|---|---|---|---|---|
| Comparative Example 4 | 75 | 14.625 | 0.375 | 10 |
| Comparative Example 5 | 75 | 14.625 | 0.375 | 10 |

The first conductive material was plate-like graphite (specific surface area: 17 m$^2$/g, average particle diameter (D50): 3.5 pm), and the second conductive material was SWCNT. In Table 1, based on total 100 parts by weight of the negative electrode active material layer composition composed of the silicon-based active material, the first conductive material, the second conductive material, and polyacrylamide (PAM) as the binder, each part by weight is shown.

As a specific mixing method, after the first conductive material, the second conductive material, the binder, and water were dispersed by performing first mixing under the conditions of the following Table 2 using a homomixer, the silicon-based active material was added thereto, and then the resulting mixture was dispersed by performing second mixing under the conditions in the following Table 2, thereby preparing a negative electrode slurry.

In this case, the Dmin and Dmax values in the negative electrode slurry particle size satisfied the ranges in the following Table 3.

One surface of a copper current collector satisfying a thickness of 8 um as a negative electrode current collector layer was coated with the negative electrode slurry in a weight loading amount shown in the following Table 3, and the copper current collector was roll-pressed, and dried in a vacuum oven at 130°C for 10 hours to forma a negative electrode active material layer, and the thickness of the roll-pressed electrode and the thickness of the negative electrode active material layer are shown in the following Table 3 (the negative electrode has a porosity of 40.0%).

[Table 2]

|  | First mixing | | | Second mixing | | |
|---|---|---|---|---|---|---|
|  | RPM | Time (min) | Slurry temperature (°C) | RPM | Time (min) | Slurry temperature (°C) |
| Example 1 | 2500 | 20 | 20.6 | 2500 | 50 | 24.0 |
| Example 2 | 2500 | 20 | 21.4 | 2500 | 50 | 22.5 |
| Example 3 | 2500 | 20 | 21.5 | 2500 | 50 | 23.7 |
| Example 4 | 2500 | 20 | 19.1 | 2500 | 60 | 27.9 |
| Example 5 | 2500 | 20 | 19.8 | 2500 | 50 | 22.7 |
| Example 6 | 2500 | 20 | 20 | 2500 | 50 | 24 |
| Comparative Example 1 | 2500 | 20 | 19.5 | 2500 | 100 | 32.9 |
| Comparative Example 2 | 2500 | 20 | 19.7 | 2500 | 100 | 30.0 |
| Comparative Example 3 | 2500 | 30 | 21.5 | 2500 | 50 | 23.1 |
| Comparative Example 4 | 2500 | 30 | 22.8 | 2500 | 30 | 22.2 |
| Comparative Example 5 | 2500 | 30 | 21.7 | 2500 | 50 | 23.5 |

[Table 3]

|  | Dmin (μm) | Dmax (μm) | Weight loading amount (mg/25cm$^2$) | Thickness (μm) of roll-pressed electrode | Thickness (μm) of cross-sectional active material layer | Whether electrode is defective |
|---|---|---|---|---|---|---|
| Example 1 | 6 | 9 | 71 | 48.6 | 20.3 | X |
| Example 2 | 5 | 7 | 73.2 | 52 | 22 | X |
| Example 3 | 6 | 15 | 120.2 | 89 | 37 | X |
| Example 4 | 2 | 15 | 145.9 | 91 | 38 | X |

(continued)

| | Dmin ($\mu$m) | Dmax ($\mu$m) | Weight loading amount (mg/25cm$^2$) | Thickness ($\mu$m) of roll-pressed electrode | Thickness ($\mu$m) of cross-sectional active material layer | Whether electrode is defective |
|---|---|---|---|---|---|---|
| Example 5 | 6 | 7 | 110.9 | 85 | 35 | X |
| Example 6 | 2 | 7 | 97.4 | 66 | 29 | X |
| Comparative Example 1 | 5 | 60 | Occurrence of clogging during transfer => impossible to coat negative electrode active material layer | | | ○ |
| Comparative Example 2 | 7 | 38 | Occurrence of clogging during transfer => impossible to coat negative electrode active material layer | | | ○ |
| Comparative Example 3 | 10 | 30 | 87.3 | 65.6 | 28.8 | △ |
| Comparative Example 4 | 11 | 40 | Occurrence of clogging during transfer => impossible to coat | | | ○ |

| | | | negative electrode active material layer | | | |
|---|---|---|---|---|---|---|
| Comparative Example 5 | 2 | 5 | 119.9 | 85.6 | 35.3 | △ |

In Table 3, for the presence or absence of electrode defects, the case where an electrode was produced without problems in the electrode manufacturing process was indicated by X, the case where an electrode was not manufactured because problems occurred in the process of manufacturing the electrode itself was indicated by O, and the case where an electrode itself was manufactured, but problems such as generation of particles in the manufactured electrode occurred was indicated by △.

As can be confirmed from the results in Tables 1 to 3, the negative electrode slurry according to the present application satisfies a Dmin of 8 um or less and a Dmax of 7 um or more and 30 um or less in the negative electrode slurry particle size (Grinding Gauge). In the case of a silicon-based negative electrode, capacity characteristics are excellent, but it is important to form thin electrodes for rapid charging, and when the particle size value of the negative electrode slurry according to the present application satisfies the above range, the coating thickness of the negative electrode slurry is formed to be small, and accordingly, it could be confirmed that the silicon-based negative electrode has a feature in which it is possible to secure a negative electrode for a lithium secondary battery, which has excellent capacity characteristics and is also simultaneously capable of rapid charging.

Comparative Examples 1 and 2 correspond to the case where the Dmin in the negative electrode slurry particle size (Grinding Gauge) satisfies a range of 8 $\mu$m or less, but the Dmax exceeds the range according to the present application. These are complex factors in the composition, content and process conditions of the material included in the negative electrode composition, but as can be seen in Table 2, the main reason for this is that although the mixing time was increased, the temperature of the slurry increased and the phase of the slurry including a large amount of binder became unstable. In this case, it could be confirmed that the process itself did not proceed because clogging occurred during the transfer process of the slurry and accordingly, the negative active material layer could not be coated.

Comparative Example 3 corresponds to the case where the Dmax in the negative electrode slurry particle size (Grinding Gauge) satisfies the range according to the present application, but the Dmin exceeds the range according to the present application. Although the aforementioned results are exhibited according to complex factors under the composition, content and process conditions of the material included in the negative electrode composition, the problems of materials included in the negative electrode composition and the differences according to the mixing method correspond to main factors. In this case, unlike Comparative Examples 1 and 2, clogging did not occur during the transfer process, but it could be confirmed that particles were generated after the negative electrode active material layer was formed, causing problems after the manufacture.

Comparative Example 4 corresponds to the case where both the Dmax and Dmin in the negative electrode slurry particle size (Grinding Gauge) exceed the ranges according to the present application. As described above, this is the result of a combination of complex factors, but as can be seen in Table 2, problems according to working hours correspond to the main cause. Even in this case, similarly to Comparative Examples 1 and 2, it could be confirmed that the process itself did not proceed because clogging occurred during the transfer process of the slurry and accordingly, the negative electrode active material layer could not be coated.

Finally, Comparative Example 5 corresponds to the case where the Dmax in the negative electrode slurry particle size (Grinding Gauge) is less than the present range. This case also corresponds to the factors similar to Comparative Example 3, and in this case, clogging did not occur during the transfer process, but it could be confirmed that particles were generated after the negative electrode active material layer was formed, causing problems after the manufacture.

**Claims**

1. A negative electrode slurry comprising:

   a negative electrode active material layer composition; and
   a solvent,
   wherein the negative electrode active material layer composition comprises: a silicon-based active material; a negative electrode conductive material; and a negative electrode binder, and
   particles in the negative electrode slurry have a Dmin of 8 um or less and a Dmax of 7 um or more and 30 um or less in a negative electrode slurry particle size (Grinding Gauge).

2. The negative electrode slurry of claim 1, wherein the negative electrode slurry has an average particle size (D50) value of 5 um or more and 20 $\mu$m or less.

3. The negative electrode slurry of claim 1, wherein the silicon-based active material comprises one or more selected from the group consisting of SiOx, wherein x=0, SiOx, wherein 0<x<2, SiC, and a Si alloy.

4. The negative electrode slurry of claim 1, wherein the silicon-based active material comprises one or more selected from the group consisting of SiOx, wherein x=0, and SiOx, wherein 0<x<2, and comprises 70 parts by weight or more of the SiOx, wherein x=0, based on 100 parts by weight of the silicon-based active material.

5. The negative electrode slurry of claim 1, wherein the silicon-based active material is present in an amount of 60 parts by weight or more based on 100 parts by weight of the negative electrode active material layer composition.

6. The negative electrode slurry of claim 1, wherein the negative electrode conductive material is comprised in an amount of 5 parts by weight or more and 40 parts by weight or less, based on 100 parts by weight of the negative electrode active material layer composition.

7. The negative electrode slurry of claim 1, wherein the negative electrode conductive material comprises a planar conductive material; and a linear conductive material.

8. The negative electrode slurry of claim 1, wherein the negative electrode binder comprises a water-based binder, and the negative electrode binder is comprised in an amount of 5 parts by weight or more and 15 parts by weight or less based on 100 parts by weight of the negative electrode active material layer composition.

9. A method for preparing a negative electrode slurry, the method comprising:

   forming a mixture by mixing a negative electrode conductive material; and a negative electrode binder;
   performing a first mixing by adding a solvent to the mixture; and
   performing a second mixing by adding a silicon-based active material to the mixed mixture,
   wherein the performing of the first mixing and the second mixing comprises performing mixing at 2,000 rpm to 3,000 rpm for 10 minutes to 60 minutes, and
   the negative electrode slurry has a Dmin of 8 um or less and a Dmax of 7 um or more and 30 um or less in a negative electrode slurry particle size (Grinding Gauge).

10. The method of claim 9 wherein a mixing temperature in the performing of the first mixing and second mixing is 50°C or less.

11. A negative electrode for a lithium secondary battery, comprising:

a negative electrode current collector layer; and

a negative electrode active material layer provided on one surface or both surfaces of the negative electrode current collector layer,

wherein the negative electrode active material layer comprises the negative electrode slurry of any one of claims 1 to 8 or a dried material thereof.

12. The negative electrode of claim 11, wherein the negative electrode current collector layer has a thickness of 1 um or more and 100 $\mu$m or less,

the negative electrode active material layer has a thickness of 1 um or more and 50 $\mu$m or less, and

the negative electrode for a lithium secondary battery has a thickness of 2 um or more and 100 $\mu$m or less.

13. A method for manufacturing a negative electrode for a lithium secondary battery, the method comprising:

preparing a negative electrode current collector layer;

forming a negative electrode coating layer by coating one surface or both surfaces of the negative electrode current collector layer with the negative electrode slurry according to any one of claims 1 to 8;

drying the negative electrode coating layer; and forming a negative electrode active material layer by roll-pressing the negative electrode coating layer.

14. The method of claim 13, wherein the negative electrode coating layer has a thickness of 20 um or more and 50 um or less.

[Figure 1]

[Figure 2]

<table>
<tr><td colspan="2">**INTERNATIONAL SEARCH REPORT**</td><td>International application No.<br>**PCT/KR2023/003086**</td></tr>
</table>

**A.    CLASSIFICATION OF SUBJECT MATTER**

**H01M 4/1395**(2010.01)i; **H01M 4/38**(2006.01)i; **H01M 4/583**(2010.01)i; **H01M 4/134**(2010.01)i; **H01M 4/62**(2006.01)i; **H01M 4/04**(2006.01)i; **H01M 10/052**(2010.01)i

According to International Patent Classification (IPC) or to both national classification and IPC

**B.    FIELDS SEARCHED**

Minimum documentation searched (classification system followed by classification symbols)

H01M 4/1395(2010.01); H01M 10/052(2010.01); H01M 4/131(2010.01); H01M 4/133(2010.01); H01M 4/134(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 슬러리(slurry), 실리콘(silicon), 믹싱(mixing), 입도(particle size), 음극(anode), 이차전지(secondary battery)

**C.    DOCUMENTS CONSIDERED TO BE RELEVANT**

| Category* | Citation of document, with indication, where appropriate, of the relevant passages | Relevant to claim No. |
|---|---|---|
| A | KR 10-2019-0061013 A (GRST INTERNATIONAL LIMITED) 04 June 2019 (2019-06-04)<br>See claims 1-19. | 1-14 |
| A | KR 10-2020-0109141 A (LG CHEM, LTD.) 22 September 2020 (2020-09-22)<br>See claims 1-12. | 1-14 |
| A | KR 10-2021-0042659 A (LG CHEM, LTD.) 20 April 2021 (2021-04-20)<br>See claims 1-10. | 1-14 |
| A | KR 10-2021-0060191 A (LG CHEM, LTD.) 26 May 2021 (2021-05-26)<br>See claims 1-13. | 1-14 |
| A | KR 10-2021-0101540 A (LG ENERGY SOLUTION, LTD.) 19 August 2021 (2021-08-19)<br>See claims 1-12. | 1-14 |

☐ Further documents are listed in the continuation of Box C.          ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **22 June 2023** | **22 June 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

| INTERNATIONAL SEARCH REPORT<br>Information on patent family members | | | | International application No.<br>**PCT/KR2023/003086** | | |
|---|---|---|---|---|---|---|
| Patent document<br>cited in search report | | Publication date<br>(day/month/year) | Patent family member(s) | | | Publication date<br>(day/month/year) |
| KR 10-2019-0061013 | A | 04 June 2019 | CN | 109923697 | A | 21 June 2019 |
| | | | CN | 109923697 | B | 18 November 2022 |
| | | | EP | 3526845 | A1 | 21 August 2019 |
| | | | JP | 2019-535110 | A | 05 December 2019 |
| | | | KR | 10-2319176 | B1 | 29 October 2021 |
| | | | SG | 11202000093 | A | 27 February 2020 |
| | | | TW | 201824622 | A | 01 July 2018 |
| | | | US | 10727489 | B2 | 28 July 2020 |
| | | | US | 2019-0229338 | A1 | 25 July 2019 |
| | | | WO | 2018-068663 | A1 | 19 April 2018 |
| KR 10-2020-0109141 | A | 22 September 2020 | CN | 113632260 | A | 09 November 2021 |
| | | | EP | 3863084 | A1 | 11 August 2021 |
| | | | US | 2022-0013784 | A1 | 13 January 2022 |
| | | | WO | 2020-185014 | A1 | 17 September 2020 |
| KR 10-2021-0042659 | A | 20 April 2021 | None | | | |
| KR 10-2021-0060191 | A | 26 May 2021 | CN | 114556611 | A | 27 May 2022 |
| | | | EP | 4044274 | A1 | 17 August 2022 |
| | | | US | 2022-0384781 | A1 | 01 December 2022 |
| | | | WO | 2021-101188 | A1 | 27 May 2021 |
| KR 10-2021-0101540 | A | 19 August 2021 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020220037218
- JP 2009080971 A